# EUROPÄISCHE PATENTSCHRIFT

(11) **EP 0 903 360 B1**
(45) Veröffentlichungstag und Bekanntmachung des Hinweises auf die Patenterteilung: **01.12.2004**
(21) Anmeldenummer: 98117013.7
(22) Anmeldetag: 09.09.1998
(51) Int. Cl.: C08G 18/40

(54) **Hydrophile Polyester-Polyurethan-Schaumstoffe, ein Verfahren zu deren Herstellung und deren Verwendung als feuchtigkeitsaufnehmende Werkstoffe**
Hydrophile polyester-polyurethane foams, a process for their preparation and their use as humidity absorbing products
Mousses polyester-polyuréthane hydrophiliques, un procédé pour leur préparation et leur utilisation comme produits d'absorption de l'humidité

(30) Priorität: 22.09.1997 DE 19741646
(43) Veröffentlichungstag der Anmeldung: 24.03.1999
(73) Patentinhaber: Bayer MaterialScience AG, 51368 Leverkusen (DE)
(72) Erfinder: Herzog, Klaus-Peter, 51371 Leverkusen (DE); Baatz, Günther, Dr., 51503 Rösrath (DE)

(56) Entgegenhaltungen:
- EP-A- 0 339 369
- US-A- 3 806 474
- US-A- 4 049 592
- US-A- 5 650 450

## Beschreibung

Die Erfindung betrifft hydrophile Polyesterschaumstoffe, ein Verfahren zu deren Herstellung sowie deren Verwendung als feuchtigkeitsaufnehmende Werkstoffe, z.B. im Haushalts-, Hygiene- oder Automobilbereich.

Bei der Herstellung von Polyether- oder Polyester-PUR-Weichschaumstoffen nach dem Einstufen-("one shot")-Verfahren, welches das meist angewandte kommerzielle Verfahren zur Blockschaumstoff-Herstellung ist, entstehen Schaumstoffe, die selbst bei großer Offenzelligkeit nur ungenügende hydrophile Eigenschaften besitzen.

Es hat in diesem Zusammenhang nicht an Versuchen gefehlt, wenigstens durch Nachbehandlung der Schaumstoffmatrix oder durch Mitverschäumung von Netzmitteln oder ionischen Tensiden (vgl. DE-A 2207356) den eher hydrophoben Charakter gebrauchsüblicher Blockschaumstoffe hydrophiler einzustellen.

Statt der teureren und aufwendigen Nachbehandlung von Schaumstoffen zur Verbesserung der Hydrophilie wurde vornehmlich durch Mitverschäumung von an sich hydrophilen Zusatzstoffen im Einstufen-Verfahren in gleicher Weise versucht, die hydrophilen Eigenschaften zu verbessern. Zu solchen Zusatzstoffen gehören z.B. Cellulosederivate wie Celluloseester, Methylcellulose, Carboxymethyl- und Hydroxyethylcellulose etc. ebenso wie Aminosäure- und Sulfonsäure-Derivate, Betaine, Lactone und Ethoxylierungsprodukte von Glykolen oder verwandten Ausgangsstoffen (vgl. DE-A 2207361, US 3413245 bzw. US 3806474).

Propoxylierungs- und Ethoxylierungsprodukte von mehrwertigen Alkoholen sind Ausgangsstoffe zur Herstellung von Polyether-PUR-Weichschaumstoffen durch Umsetzung dieser allgemein als Polyetherpolyole (üblicherweise trifunktionell für Weichschaumstoff-Anwendungen) bezeichneten Rohstoffe mit Diisocyanaten unter Mitverwendung von Wasser (für die Treibreaktion), spezifischen Polyetherpolysiloxanen und weiteren Hilfsmitteln.

Übliche Polyetherpolyole im o.g. Sinne (Standardpolyole) enthalten im wesentlichen das Propoxylierungsprodukt trifunktioneller Starter neben wenig (0 - 20 %) Ethoxylierungsanteil im Polyol.

Polyetherpolyole mit höherem Ethoxylierungsgrad (über ca. 30 %) sind Spezialitäten, die oft nicht mehr mischbar mit Standardpolyolen sind und führen meist zu Verschäumungsschwierigkeiten, vor allem mit steigendem Ethoxylierungsgrad - nicht zuletzt aufgrund ihrer bemerkenswert gesteigerten Reaktivität.

Polyetherpolyole mit einem hohen Ethoxylierungsgrad von ca. 50 - 95 % wie beispielsweise das Polyol VP PU 41WB01 (Bayer AG) lassen sich nur in eng begrenzten Mengenverhältnissen zusammen mit Standard-Polyetherpolyolen zu Polyetherschaumstoffen umsetzen und führen zu einer Weichstellung der Matrix (sog. Hypersoftschaumstoffe).

Auch der Zusatz von reinen Ethylenoxid-Polymeren ist möglich (z.B. PEG 200 bis PEG 600), allerdings in wesentlich geringerem Anteil von ca. 2-15 % zu Standardpolyetherpolyol mit ebenfalls deutlicher Weichstellung der resultierenden Polyether-Schaumstoffmatrix.

In vergleichbarer Weise wird auch die Mitverschäumung von Polyetherdiolen in Mischung mit Standard-Polyetherpolyol in der BE-A 707412 beschrieben. Nach dieser Lehre werden vorgegebene Polyoxiethylenglykole verschiedener Molmasse im Bereich der Produkte PEG 600 bis PEG 2000 (Hoechst AG) in einem separaten Schritt propoxyliert, um die Reaktivität der resultierenden Polyetherdiole in einen zur Verschäumung mit Standard-Polyetherpolyolen kompatiblen Bereich zu bringen (sekundäre OH-Endgruppen anstelle primärer).

Die direkte Verschäumung reiner Polyoxiethylenglykole oder zumindest von Polyolen mit hohem Ethoxylierungsgrad und einem hohen Anteil primärer OH-Endgruppen wie beispielsweise VP PU 41WB01, VP PU 3170 (beide Bayer AG) oder Voranol 1421 (DOW Chemical) im Einstufen-("one shot")-Verfahren nach Ether-Rezepturen ohne Abmischung mit Standard-Polyetherpolyolen ist bislang nicht möglich. Einer der Gründe hierfür ist die nicht mehr kontrollierbare Reaktivität derartiger hoch-ethoxylierter Polyole.

Die Verschäumung von reinen Polyoxiethylenglykolen auf üblichen Anlagen ist bislang nur über den Zwischenschritt der Prepolymerisierung möglich. Hierzu gibt es eine eigene Produktfamilie von Prepolymeren (z. B. Hypol Polymers der W. R. Grace Ltd.) als Spezialität für verschiedenartige Anwendungen mit den entsprechenden verfahrenstechnischen Nachteilen.

Die Herstellung hydrophil eingestellter Polyester-PUR-Schaumstoffe höherer Rohdichte (≥ 50 kg/m³) wird in der US 3806474 unter Mitverwendung prepolymerisierter Polyoxiethylendiole des Molgewichtsbereiches von 500 bis 2000 nach Esterrezepturen mit besonderen Tensiden zur Emulgierung und Stabilisierung beschrieben.

Als Haushaltsschwämme werden bevorzugt Polyester-PUR-Schaumstoffe eingesetzt, da deren Schwammstruktur und Griffcharakteristik wesentlich besser und einfacher dem Vorbild Naturschwamm nachstellbar sind als bei den homologen Polyether-PUR-Schaumstoffen. Darüber hinaus besitzen Polyester-PUR-Schaumstoffe im Vergleich mit Polyether-PUR-Schaumstoffen gleicher Rohdichte überlegene Eigenschaften bezüglich Zugfestigkeit und Bruchdehnung, was für den Gebrauch als Haushaltsschwamm und verwandte Anwendungen wichtig ist.

Der Erfindung lag daher die Aufgabe zugrunde, ein Verfahren aufzufinden, nach dem hydrophile Polyester-PUR-Schaumstoffe im Einstufen-(one shot")-Verfahren ohne die Verwendung propoxylierter oder prepolymerisierter Polyoxiethylendiol-Komponenten und ohne Zusatz emulgierender Zusatzstoffe erhalten werden.

Die Aufgabe wurde überraschenderweise dadurch gelöst, daß durch Zumischung handelsüblicher hochethoxylierter Polyetherpolyole mit einem Ethoxylierungsgrad von über 30 % zu üblichen Polyesterpolyolen nach Esterrezepturen hydrophile PUR-Schaumstoffe mit dem Charakter von Polyester-PUR-Schaumstoffen herstellbar sind.

Gegenstand der Erfindung ist somit ein Verfahren zur Herstellung hydrophiler Polyester-PUR-Schaumstoffe, bei dem man
a) Polyisocyanate mit
b) mindestens zwei Hydroxylgruppen aufweisenden Polyesterpolyolen mit einem mittleren Molekulargewicht im Bereich von 400 bis 10 000 und
c) mindestens zwei Hydroxylgruppen aufweisenden ethoxylierten Polyetherpolyolen mit einem Ethoxylierungsgrad von über 30 Gew.-% und einer Funktionalität im Bereich von 2 bis 6 und
d) gegebenenfalls mindestens zwei aktive Wasserstoffatome aufweisende Verbindungen mit einem mittleren Molekulargewicht im Bereich von 32 bis 400 als Kettenverlängerungs- und/oder Vernetzungsmittel sowie
e) Katalysatoren, Wasser und/oder Treibmitteln und
f) gegebenenfalls Hilfs- und Zusatzstoffen
in einem Einstufen-("one shot")-Verfahren umsetzt.

Der Ethoxylierungsgrad der eingesetzten Polyetherpolyole liegt über 30 Gew.-%, bevorzugt zwischen 50 und 95 Gew.-%. Üblicherweise werden Trimethylolpropanund/oder Glycerin-gestartete, bevorzugt Glycerin-gestartete hochethoxylierte Polyetherpolyole, eingesetzt.

Üblicherweise liegt der Gehalt der hochethoxylierten Polyetherpolyole zwischen 2 bis 80 Gew.-%, bezogen auf die Summe der Komponenten b) bis d).

Zur Verschäumung werden ca. 2 % bis 80 % der genannten hochethoxylierten Polyetherpolyole wie beispielsweise VP PU 41WB01 (Bayer AG, trifunktionell), in entsprechender Abmischung mit üblichen Polyesterpolyolen eingesetzt. Geeignete Polyesterpolyole sind herstellbar aus organischen Dicarbonsäuren mit 2 bis 12 Kohlenstoffatomen und mehrwertigen Alkoholen durch Kondensation.

Vorzugsweise werden Bernsteinsäure, Glutarsäure oder Adipinsäure verwendet bzw. entsprechende Dicarbonsäuregemische.

Auch araliphatische Dicarbonsäuren wie Ortho- oder Terephthalsäure bzw. ungesättigte Carbonsäuren wie Malein- und Fumarsäure sind verwendbar.

Mehrwertige Alkohole als Kondensationspartner liegen meist ebenfalls im Bereich von 2 bis 12 Kohlenstoffatomen.

Besonders bevorzugt werden hierbei zweiwertige (Glykole) aus der Reihe Ethylenglykol bis Hexandiol-1,6 sowie vor allem Diethylenglykol oder Dipropylenglykol.

Als höherfunktionelle verzweigend wirkende Alkohol-Komponenten werden oft kleine Mengen Glycerin, Trimethylolpropan oder höherfunktionelle Homologe mitverwendet.

Bevorzugt werden Polyesterpolyole wie beispielsweise Desmophen 2200, Desmophen 2300 oder VP PU 60WB01 (alle genannten Produkte erhältlich bei Bayer AG) eingesetzt. Diese Polyole basieren auf Kondensationsprodukten in Adipinsäure, Diethylenglykol sowie Trimethylpropan als Vernetzungskomponente. VP PU 41WB01 ist durch eine Nachbehandlung besonders "foggingarm".

Anstelle hochethoxylierter Polyetherdiole (difunktionell) oder von VP PU 41WB01 (Bayer AG, trifunktionell, mittleres Molekulargewicht ca. 4500, Grad der Ethoxylierung ≥ 70 %) und analogen Produkten sind auch höherfunktionelle hochethoxylierte Polyetherpolyole einsetzbar, wie VP PU 3170 (Bayer AG, hexafunktionell, mittleres Molekulargewicht ca. 3400, Grad der Ethoxylierung ≥ 80 %)).

Als Polyisocyanate können eingesetzt werden:

Aliphatische, cycloaliphatische, araliphatische, aromatische und heterocyclische Polyisocyanate, wie sie z.B. von W. Siefken in Justus Liebigs Annalen der Chemie, 562 Seiten 75 bis 136, beschrieben werden, beispielsweise solche der Formel,

Q(NCO)ₙ,

in der
- n: 2 bis 4, vorzugsweise 2 bis 3, und
- Q: einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen bedeuten,
z.B. solche Polyisocyanate, wie sie in der DE-OS 2 832 253, Seiten 10 bis 11, beschrieben werden.

Besonders bevorzugt werden in der Regel die technisch leicht zugänglichen Polyisocyanate, z.B. das 2,4- und 2,6-Toluylendiisocyanat sowie beliebige Gemische dieser Isomeren (TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate (modfizierte Polyisocyanate"), insbesondere solche modifizierten Polyisocyanate, die sich vom 2,4- und/oder 2,6-Toluylendiidocyanat bzw. vom 4,4'- und/oder 2,4'-Diphenylmethandiisocyanat ableiten.

Besonders bevorzugt sind die üblicherweise eingesetzten TDI-Isomerengemische T 80, T 65 und Mischungen hieraus.

Herstellbar sind hierbei die für Polyester-PUR-Schaumstoffe üblichen Rohdichten im Bereich von ca. 20 - 80 kg/m³. Durch Mitverwendung zusätzlicher Treibmittel, z.B. mittels flüssigem Kohlendioxid nach der Nova Flex-Technik (Hennecke/Bayer AG) und verwandten Verfahren oder durch Unterdruck-Technik nach der VPF-Methode (Prefoam AG) oder analogen Techniken sind Bereich und Anwendungsmöglichkeiten entsprechend erweiterbar. Besonders bevorzugt wird indessen der Bereich von ca. 25 bis 60 kg/m³, da einerseits das Wasseraufnahmevermögen mit steigender Rohdichte ansteigt, die Benetzungsfähigkeit (zugängliche innere Oberfläche des Schaumstoffs) andererseits vom Ausmaß der erzielten Offenzelligkeit des Schaumstoffs abhängt. Letztere sinkt normalerweise mit steigender Rohdichte.

Die erfindungsgemäß hergestellten Schaumstoffe zeigen hydrophile Eigenschaften. Sie sind in der Lage, innerhalb 20-25 Sekunden, bezogen auf das Schaumstoffgewicht, die ca. 10fache Menge an Wasser aufzunehmen. Beim Auflegen der trockenen Schaumstoffe auf eine Wasseroberfläche (ab ca. 10% Polyether-Polyol-Anteil im Polyol-Gemisch) sinkt die Schaumstoffprobe innerhalb von Sekunden ein.

Bis zu einem Gehalt von ca. 30 % der beschriebenen speziellen Polyetherpolyole im Polyolgemisch geschieht dies ohne Quellen der Schaumstoffmatrix, was für einige Anwendungen durchaus wünschenswert ist.

Mit höherem Anteil an hochethoxyliertem Polyetherpolyol resultiert dann zusätzlich eine erkennbare Quellung der Schaumstoff-Matrix.

Zur Katalyse der Verschäumungsreaktion lassen sich die üblicherweise verwendeten Amine einsetzen wie z. B. N-Methyl- oder N-Ethylmorpholin, Trimethylamin, Triethylamin und homologe Trialkylamine, Dimethylpiperazin, Dimethylbenzylamin, N-Cocomorpholin oder weitere übliche Aminaktivatoren ebenso wie verschiedenartige Abmischungen derartiger Amine oder Harnstoff/Amin-Kombinationen.

Besonders bevorzugt werden allerdings Amin-Katalysatoren, die aufgrund Art und Menge möglichst wenig zum Geruch bzw. zum Fogging der hiermit hergestellten Schaumstoffe beitragen.

Gegebenenfalls können weitere Hilfs- und Zusatzstoffe, wie z.B. Flammschutzmittel, Stabilisatoren oder Dispergiermittel zugesetzt werden.

Zur Stabilisierung lassen sich neben Silikonstabilisatoren wie SE 232 (OSI), VP AI 3613 und VP AI 3614 (Bayer AG) oder B 8300 bzw. B 8301 (Goldschmidt AG) auch Silikon-freie Tenside oder Tensid-Abmischungen verwenden wie z.B. die Kombinationen EM/TX oder EM/PU 3240 (RheinChemie bzw. Bayer AG) bzw. Arcopal N 90/Genapol PF 20 (Hoechst AG).

Besonders bevorzugt werden allerdings moderne Silikonstabilisatoren eingesetzt wie VP AI 3613, VP AI 3614 (Versuchsprodukte der Bayer AG) oder B 8300 und B 8301 (Goldschmidt AG), die zu einer feinen und offenzelligeren Schaumstoff-Struktur führen. Im Prinzip handelt es sich hierbei um "maßgeschneiderte" organisch modifizierte Polyether-Polysiloxane auf Basis von Polydimethylsiloxan. Letztere lassen sich vereinfacht folgendermaßen charakterisieren: 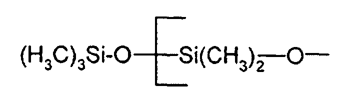 etc.

Ein weiterer Gegenstand der Erfindung ist die Verwendung der erfindungsgemäßen hydrophilen Schaumstoffe als feuchtigkeitsaufnehmende Werkstoffe, z. B. im Haushalts- und Hygienesektor, beispielsweise als Schwämme und Wischtücher oder als Feuchte-aufnehmende Unterlagen im Krankenhaus- und häuslichen Pflegebereich, als Einlagen in Wegwerf-Windeln oder als Bahnenware zur Flammkaschierung oder Klebekaschierung mit Textilien oder Folien zur Verbesserung des Feuchte-Absorptionsvermögens der resultierenden Verbundmaterialien.

In den beispielhaft genannten Anwendungsfällen ist es öfter auch nötig, zusätzliche Eigenschaftsanforderungen zu erfüllen. So läßt sich z.B. durch Retikulierung (Nachbehandlungsschritt zur maximalen Zellöffnung) der Schaumstoffe eine besonders offenzellige Schaumstoffstruktur herstellen.

Weiterhin können die erfindungsgemäßen Schaumstoffe in einer bevorzugter Variante in der Automobil-Innenausstattung, z.B. als Textil-kaschierte Sitz- und Rückenauflage, verwendet werden.

Bei Verwendungen im Automobil-Innenraum ist die Erfüllung der Fogging-Anforderungen ein wesentlicher Zusatzaspekt - einstellbar durch den Einsatz fogging-armer Polyesterpolyole wie VP PU 60WB01 (Bayer AG).

In anderen Fällen (z. B. Schwämme und Wischtücher) wiederum ist die Einstellung hoher Werte bezüglich Bruchdehnung, Zugfestigkeit und Weiterreißfestigkeit wichtig - erzielbar z.B. durch Einsatz von Desmophen 2300 (Bayer AG) als Polyester- Polyolkomponente.

Da andererseits bereits bei Mitverwendung von ca. 5 % Polyetherpolyol mit hohem Ethoxylierungsgrad eine signifikante Steigerung des Wasseraufnahmevermögens resultiert, lassen sich in derartigen Fällen hydrophil eingestellte Schaumstoffe herstellen, welche noch weitgehend das hohe Werte-Niveau von "Textilester-Schaumstoffen" besitzen auf Basis des Spezialpolyols Desmophen 2300.

Durch die in weiten Grenzen variierbare Zumischung der hochethoxylierten Polyetherpolyole und durch die Möglichkeit des Einsatzes verschiedenartiger Polyesterpolyole zur Verschäumung lassen sich so die erwünschten Schaumstoffeigenschaften in einem weiten Bereich einstellen.

Die Erfindung wird durch die nachstehend aufgeführten Beispiele näher erläutert. Wenn nicht anders vermerkt, sind die Zahlenangaben als Gewichtsteile - bezogen auf 100 Tle. Polyol - zu verstehen.

### Beispiele

### Herstellung der Schaumstoffe:

Die Reaktionskomponenten werden nach bekannten und üblichen Verfahren zur Reaktion gebracht, wobei man sich üblicherweise maschineller Einrichtungen bedient.

Einzelheiten über Verarbeitungseinrichtungen, die erfindungsgemäß in Frage kommen, werden z.B. im Kunststoff-Handbuch, Band VII, Carl Hanser-Verlag, München/Wien, 3. Auflage, 1993 auf den Seiten 193-220 beschrieben.

Die Komponenten werden gemäß den angegebenen Rezepturen intensiv miteinander vermischt und zur Umsetzung gebracht.

### Beispiel 1:

90 Gew.-Teile VP PU 60WB01
(Fogging-armes Polyesterpolyol, Bayer AG, OH-Zahl 60)
10 Gew.-Teile VP PU 41WB01
(Polyetherpolyol, Bayer AG, trifunktionell, Ethoxylierungsgrad ≥ 70%, OH-Zahl 37)
4,0 Gew.-Teile Wasser
0,25 Gew.-Teile Niax A 30 (Aminaktivator, OSI)
0,25 Gew.-Teile RC-A117 (Aminaktivator, Rhein-Chemie, Mannheim)
2,0 Gew.-Teile VP AI 3613 (Stabilisator-Versuchsprodukt, Bayer AG)
23,8 Gew.-Teile Toluylendiisocyanat T 80
(Isomerenverhältnis 2,4/2,6 = 80/20 Gew.- %)
23,8 Gew.-Teile Toluylendiisocyanat T 65
(Isomerenverhältnis 2,4/2,6 = 65/35 Gew.- %)

### Beispiel 2:

90 Gew.-Teile DE 2300, handelsübliches Polyesterpolyol, Bayer AG, OH-Zahl 50
10 Gew.-Teile VP PU 3170 (Polyetherpolyol, Bayer AG, hexafunktionell, Ethoxylierungsgrad ≥ 80%, OH-Zahl 100)
3,0 Gew.-Teile Wasser
0,2 Gew.-Teile Niax A 30 (Aminaktivator, OSI)
0,2 Gew.-Teile RC-A117 (Aminaktivator, Rhein-Chemie, Mannheim)
1,8 Gew.-Teile VP AI 3613 (Stabilisator-Versuchsprodukt, Bayer AG)
18,8 Gew.-Teile Toluylendiisocyanat T80
18,8 Gew.-Teile Toluylendiisocyanat T65

### Beispiel 3:

80 Gew.-Teile DE 2200, Standard-Polyesterpolyol, Bayer AG, OH-Zahl 60
20 Gew.-Teile VP PU 41WB01, Polyetherpolyol, Bayer AG, OH-Zahl 37
5,0 Gew.-Teile Wasser
1,2 Gew.-Teile KST 100 (Aminaktivator, Goldschmidt AG)
2,0 Gew.-Teile VP AI 3613 (Stabilisator-Versuchsprodukt, Bayer AG)
28,5 Gew.-Teile Toluylendiisocyanat T 80
28,5 Gew.-Teile Toluylendiisocyanat T 65

### Beispiel 4:

50 Gew.-Teile DE 2300, Polyesterpolyol, Bayer AG, OH-Zahl 50
50 Gew.-Teile VP PU 41WB01, Polyetherpolyol, Bayer AG, OH-Zahl 37
3,0 Gew.-Teile Wasser
0,2 Gew.-Teile Niax A 30 (Aminaktivator, OSI)
0,2 Gew.-Teile RC-A117 (Aminaktivator, Rhein-Chemie, Mannheim)
1,5 Gew.-Teile SE 232 (Silikonstabilisator, OSI)
18 Gew.-Teile Toluylendiisocyanat T 80
18 Gew.-Teile Toluylendiisocyanat T 65

### Beispiel 5:

20 Gew.-Teile DE 2200, Polyesterpolyol, Bayer AG, OH-Zahl 60
80 Gew.-Teile VP PU 41WB01, Polyetherpolyol, Bayer AG, OH-Zahl 37
2,0 Gew.-Teile Wasser
0,2 Gew.-Teile Niax A 30 (Aminaktivator, OSI)
0,2 Gew.-Teile RC-A117 (Aminaktivator, Rhein-Chemie, Mannheim)
1,5 Gew.-Teile B 8300 ( Silikonstabilisator, Goldschmidt AG)
25,6 Gew.-Teile Toluylendiisocyanat T 65

### Beispiel 6:

80 Gew.-Teile DE 2300, Polyesterpolyol, Bayer AG, OH-Zahl 50
20 Gew.-Teile VP PU 41WB01, Polyetherpolyol, Bayer AG, OH-Zahl 37
3,0 Gew.-Teile Wasser
1,0 Gew.-Teile KST 100 (Aminaktivator, Goldschmidt AG)
2,0 Gew.-Teile VP AI 3614 (Stabilisator-Versuchsprodukt, Bayer AG)
3,0 Gew.-Teile Schwammpaste, bestehend aus 90% VP PU 41WB01 (Polyetherpolyol, Bayer AG, OH-Zahl 37) und 10% Loxiol G 20 (Stearinsäure, Dehydag, Düsseldorf)
19,3 Gew.-Teile Toluylendiisocyanat T 80
19,3 Gew.-Teile Toluylendiisocyanat T 65

### Beispiel 7:

90 Gew.-Teile DE 2300, Polyesterpolyol, Bayer AG, OH-Zahl 50
10 Gew.-Teile VP PU 41WB01, Polyetherpolyol, Bayer AG, OH-Zahl 37
3,0 Gew.-Teile Wasser
0,2 Gew.-Teile Niax A 30 (Aminaktivator, OSI)
0,2 Gew.-Teile RC-A117 (Aminaktivator, Rhein-Chemie, Mannheim)
2,0 Gew.-Teile Dispergiermittel EM (Rhein-Chemie, Mannheim)
1,0 Gew.-Teile Zusatzmittel VP PU 3240 (Bayer AG)
4,0 Gew.-Teile Schwammpaste, bestehend aus 90% VP PU 41WB01
(Polyetherpolyol, Bayer AG, OH-Zahl 37) und 10% Loxiol G 20
(Stearinsäure, Dehydag, Düsseldorf)
38,0 Gew.-Teile Toluylendiisocyanat T 80

### Bestimmung der Hydrophilie:

Zur Bestimmung der Hydrophilie wurden die in den Beispielen aufgeführten Schaumstoff in anwendungsspezifischen Simulationstests gegen einen Standardesterschaumstoff geprüft. Die Rezeptur des Standardschaumstoffes sah dabei folgendermaßen aus:
100 Gew.-Teile Desmophen 2300
3,0 Gew.-Teile Wasser
1,0 Gew.-Teile AI 3613
0,2 Gew.-Teile Niax A 30
0,2 Gew.-Teile RC A117
36,8 Gew.-TeileToluylendiisocyanat T 80

Die Tests wurden wie folgt durchgeführt:
1. Die Schaumstoffe wurden trocken auf eine Wasseroberfläche gelegt, wobei der hydrophile gemäß den Beispielen 1 bis 7 hergestellte Schaumstoff innerhalb von 25 sec komplett im Wasser einsank. Der Standardschaumstoff schwamm dagegen mehr als 1 Stunde auf der Wasseroberfläche. Wurden dagegen feuchte Schaumstoffe, aus denen das Wasser weitgehend entfernt wurde, auf die Wasseroberfläche gesetzt, sank der hydrophile Schaumstoff innerhalb von 2 sec ein; der Standardschaumstoff schwamm dagegen mehr als 1 Stunde auf dem Wasser.
2. Auf eine trockene Schaumstoff-Fläche wurde mittels einer Spritzflasche Wasser aufgetragen; der hydrophil eingestellte erfindungsgemäße Schaumstoff saugte die Wassertropfen direkt auf. Bei dem Standardschaumstoff blieben die Wassertropfen in ihrer Form bestehen (Kugel).
3. Wischtest:
   Auf eine Tischplatte wurden Wassertropfen gegeben, die der hydrophile erfindungsgemäße Schaumstoff nach dem Wischen direkt aufnahm. Wurde dagegen der Standardschaumstoff verwendet, mußte man mehrmals nachwischen bis die Tropfen aufgenommen wurden.

## Patentansprüche

1. Verfahren zur Herstellung von hydrophilen Polyester-Polyurethan-Schaumstoffen, **dadurch gekennzeichnet, daß** man
a) Polyisocyanate mit
b) mindestens zwei Hydroxylgruppen aufweisenden Polyesterpolyolen mit einem mittleren Molekulargewicht im Bereich von 400 bis 10 000 und
c) mindestens zwei Hydroxylgruppen aufweisenden ethoxylierten Polyetherpolyolen mit einem Ethoxylierungsgrad von über 30 Gew.-% und einer Funktionalität im Bereich von 2 bis 6 und
d) gegebenenfalls mindestens zwei aktive Wasserstoffatome aufweisende Verbindungen mit einem mittleren Molekulargewicht im Bereich von 32 bis 400 als Kettenverlängerungs- und/oder Vernetzungsmittel sowie
e) Katalysatoren, Wasser und/oder Treibmitteln und
f) gegebenenfalls Hilfs- und Zusatzstoffen
in einem Einstufen-("one shot")-Verfahren umsetzt.

2. Verfahren nach Anspruch 1, **dadurch gekennzeichnet, daß** der Ethoxylierungsgrad der Polyetherpolyole zwischen und 50 und 95 Gew.-% liegt.

3. Verfahren nach einem der Ansprüche 1 bis 2, **dadurch gekennzeichnet, daß** 2 bis 80 Gew.-% hoch-ethoxylierter Polyetherpolyole, bezogen auf die Summe der Komponenten b) bis d), eingesetzt werden.

4. Verfahren nach einem der Ansprüche 1 bis 3, **dadurch gekennzeichnet, daß** Polyesterpolyole auf der Basis von Adipinsäure, Diethylenglykol, Trimethylolpropan und/oder Glycerin, eingesetzt werden.

5. Hydrophile Polyester-Polyurethan-Schaumstoffe, erhältlich nach einem Verfahren gemäß einem der Ansprüche 1 bis 4.

6. Verwendung der nach einem der Ansprüche 1 bis 4 erhältlichen hydrophilen Polyester-Polyurethan-Schaumstoffe als feuchtigkeitsaufnehmende Werkstoffe.

7. Verwendung nach Anspruch 6, **dadurch gekennzeichnet, daß** die feuchtigkeitsaufnehmenden Werkstoffe Schwämme, Wischtücher, Einlagen in Windeln oder Bettunterlagen sind.

8. Verwendung nach Anspruch 6, **dadurch gekennzeichnet, daß** die feuchtigkeitsaufnehmenden Werkstoffe in der Automobil-Innenausstattung verwendet werden.

9. Verwendung nach Anspruch 8, **dadurch gekennzeichnet, daß** die zurAutomobil-Innenausstattung verwendeten hydrophilen Polyester-Polyurethan-Schaumstoffe fogging-arm sind.

## Claims

1. Process for producing hydrophilic polyester-polyurethane foams, **characterised in that**
a) polyisocyanates are reacted with
b) polyester polyols containing at least two hydroxyl groups and having a mean molecular weight in the range from 400 to 10000,
and
c) ethoxylated polyether polyols containing at least two hydroxyl groups and having a degree of ethoxylation of more than 30 wt.% and a functionality in the range from 2 to 6, and
d) optionally with compounds containing at least two active hydrogen atoms and having a mean molecular weight in the range from 32 to 400 as chain extenders and/or cross-linking agents, as well as
e) catalysts, water and/or blowing agents, and
f) optionally auxiliary substances and additives,
in a one-stage ("one shot") process.

2. Process according to claim 1, **characterised in that** the degree of ethoxylation of the polyether polyols is between 50 and 95 wt.%.

3. Process according to either of claims 1 and 2, **characterised in that** 2 to 80 wt.% of highly ethoxylated polyether polyols, referred to the sum of the components b) to d), are used.

4. Process according to one of claims 1 to 3, **characterised in that** polyester polyols based on adipic acid, diethylene glycol, trimethylol propane and/or glycerol are used.

5. Hydrophilic polyester-polyurethane foams, obtainable by a process according to one of claims 1 to 4.

6. Use of the hydrophilic polyester-polyurethane foams obtainable according to one of claims 1 to 4, as moisture-absorbing materials.

7. Use according to claim 6, **characterised in that** the moisture-absorbing materials are sponges, wiping cloths, linings in nappies, or bed underlays.

8. Use according to claim 6, **characterised in that** the moisture-absorbing materials are used in automobile interior finishes.

9. Use according to claim 8, **characterised in that** the hydrophilic polyester-polyurethane foams used for automobile interior finishes are low-fogging.

## Revendications

1. Procédé de préparation de mousses hydrophiles de polyester-polyuréthane **caractérisé en ce que** l'on met en réaction:
a) un polyisocyanate avec
b) des polyesterpolyols présentant au moins deux radicaux hydroxyle avec un poids moléculaire moyen de l'ordre de 400 à 10.000 et
c) des polyétherpolyols éthoxylés présentant au moins deux radicaux hydroxyle avec un degré d'éthoxylation de plus de 30% en poids et une fonctionnalité de l'ordre de 2 à 6 et
d) éventuellement des composés présentant au moins deux atomes d'hydrogène actif avec un poids moléculaire moyen de l'ordre de 32 à 400 comme agent d'allongement de chaîne et/ou de réticulation ainsi que
e) des catalyseurs, de l'eau et/ou des agents gonflants et
f) éventuellement des additifs et adjuvants
dans un procédé en une étape ("one-shot").

2. Procédé selon la revendication 1, **caractérisé en ce que** le degré d'éthoxylation des polyétherpolyols se situe entre 50 et 95% en poids.

3. Procédé selon l'une des revendications 1 à 2, **caractérisé en ce que** 2 à 80% en poids de polyétherpolyols fortement éthoxylés par rapport à la somme des composants b) et d) sont utilisés.

4. Procédé selon l'une des revendications 1 à 3, **caractérisé en ce que** des polyesterpolyols à base d'acide adipique, de diéthylèneglycol, de triméthylolpropane et/ou de glycérine sont utilisés.

5. Mousses hydrophiles de polyester-polyuréthane obtenues selon la procédé conforme à l'une des revendications 1 à 4.

6. Mise en oeuvre des mousses hydrophiles de polyester-polyuréthane obtenues selon l'une des revendications 1 à 4 comme matériau absorbant l'humidité.

7. Mise en oeuvre selon la revendication 6, **caractérisé en ce que** les matériaux absorbant l'humidité sont des éponges, des chiffons, l'intérieur de langes ou des alaises.

8. Mise en oeuvre selon la revendication 6, **caractérisé en ce que** les matériaux absorbant l'humidité sont utilisés dans l'équipement intérieur automobile.

9. Mise en oeuvre selon la revendication 8, **caractérisé en ce que** les mousses hydrophiles de polyester-polyuréthane mises en oeuvre dans l'équipement intérieur automobile sont pauvres en fogging.
